# FASCICULE DE BREVET EUROPEEN

(11) **EP 2 917 741 B1**
(45) Date de publication et mention de la délivrance du brevet: **18.11.2020**
(21) Numéro de dépôt: 13801630.8
(22) Date de dépôt: 30.10.2013
(51) Int. Cl.: G01N 35/04, G01N 35/00

(54) **DISPOSITIF D'ANALYSE POUR DIAGNOSTIC IN VITRO**
ANALYSEVORRICHTUNG FÜR IN-VITRO-DIAGNOSTIK
ANALYSIS DEVICE FOR IN VITRO DIAGNOSTICS

(30) Priorité: 09.11.2012 FR 1260661
(43) Date de publication de la demande: 16.09.2015
(73) Titulaire: ARTEION, 75007 Paris (FR)
(72) Inventeur: ROUSSEAU, Alain, F-75005 Paris (FR)
(74) Mandataire: Verriest, Philippe
(86) Numéro de dépôt international: PCT/FR2013/052597
(87) Numéro de publication internationale: WO 2014/072616

(56) Documents cités:
- EP-A1- 1 174 717
- WO-A1-2008/059685
- FR-A1- 2 907 905
- US-A1- 2005 196 320

## Description

La présente invention concerne un dispositif d'analyse pour diagnostic in vitro, et plus particulièrement un dispositif d'analyse sur sang total.

Le document FR 2 907 905 divulgue un dispositif d'analyse pour diagnostic in vitro comprenant :
- une pluralité de portoirs destinés à recevoir des récipients équipés d'éléments d'obturation et contenants des échantillons de liquide biologique à analyser,
- un module de chargement agencé pour déplacer chaque portoir entre une position de chargement et une première position intermédiaire,
- un module d'agitation agencé pour déplacer chaque portoir entre la première position intermédiaire et une deuxième position intermédiaire et pour agiter ledit portoir,
- un module de déchargement agencé pour déplacer chaque portoir entre la deuxième position intermédiaire et une position de déchargement, et
- un module de prélèvement agencé pour prélever des échantillons de liquide biologique dans les récipients reçus dans l'au moins un portoir.

Selon le document FR 2 907 905, le module de chargement comprend un élément de stockage prévu pour permettre un empilement de portoirs orientés sensiblement horizontalement, et des moyens d'extraction agencés pour extraire les portoirs hors de l'élément de stockage en direction du module d'agitation. Les moyens d'extraction sont plus particulièrement agencés pour déplacer chaque portoir en translation selon une direction horizontale et parallèle au plan dudit portoir.

Un tel positionnement à plat des portoirs dans l'élément de stockage nécessite un chargement manuel des portoirs dans ce dernier, ce qui implique d'une part des manipulations fastidieuses pour un opérateur, et d'autre une faible cadence d'analyse.

De plus, selon le document FR 2 907 905, le module d'agitation comprend des moyens de déplacement et de basculement agencés de manière à déplacer un portoir d'une position d'introduction dans le module d'agitation dans laquelle ledit portoir s'étend sensiblement horizontalement à une position de retrait dudit module d'agitation dans laquelle ledit portoir s'étend sensiblement verticalement.

De par cette configuration des modules de chargement, de déchargement et d'agitation, le dispositif d'analyse décrit dans le document FR 2 907 905 présente une structure complexe et des coûts de fabrication élevés.

Un état de l'art pertinent se trouve également dans la divulgation du document EP 1 174 717.

La présente invention vise à remédier à ces inconvénients.

Le problème technique à la base de l'invention consiste donc à fournir un dispositif d'analyse pour diagnostic in vitro qui soit de structure simple et économique, tout en assurant une cadence d'analyse élevée.

A cet effet, la présente invention concerne un dispositif d'analyse pour diagnostic in vitro, selon la revendication 1.

Une telle configuration du module d'agitation et des modules de chargement et de déchargement permet d'assurer un déplacement des portoirs entre les positions de chargement et de déchargement à l'aide de moyens de déplacement simples, ce qui améliore la fiabilité et diminue les coûts de fabrication du dispositif d'analyse selon l'invention.

En outre, une telle configuration des modules de chargement et de déchargement permet d'assurer un chargement et un déchargement automatiques des portoirs dans et hors du dispositif d'analyse selon l'invention, par exemple en disposant des convoyeurs de chargement et de déchargement en regard respectivement des modules de chargement et de déchargement. Ces dispositions permettent d'assurer des cadences d'analyse élevées.

Il convient de noter que le dispositif d'analyse selon l'invention peut être utilisé pour effectuer notamment des analyses d'hématologie, des analyses de Numération Formule Sanguine (NFS), des analyses de cytologie, des analyses de cytométrie en flux, des analyses d'immuno-hématologie, des analyses de coagulation hémostase, ou encore pour préparer des lames pour observation automatique par microscope de cellules et pour déterminer la vitesse de sédimentation, etc.

Selon un mode de réalisation de l'invention, le module d'agitation est agencé de telle sorte que l'au moins un portoir s'étend sensiblement dans un même plan dans les première et deuxième positions intermédiaires.

Selon un mode de réalisation de l'invention, le module d'agitation est agencé de telle sorte que l'au moins un portoir s'étend sensiblement verticalement dans les première et deuxième positions intermédiaires.

De façon avantageuse, les première et deuxième positions intermédiaires correspondent respectivement à des positions d'insertion et de retrait d'un portoir dans et hors du module d'agitation.

Avantageusement, les première et deuxième positions intermédiaires sont respectivement disposées à l'une des extrémités des modules de chargement et de déchargement.

Selon un mode de réalisation de l'invention, les modules de chargement et de déchargement sont agencés de telle sorte que les première et deuxième directions de déplacement sont sensiblement perpendiculaires au plan de l'au moins un portoir.

Selon une caractéristique de l'invention, les modules de chargement et de déchargement sont agencés pour maintenir l'au moins un portoir sensiblement vertical, et plus particulièrement les récipients reçus dans ledit portoir, lors de ses déplacements selon les première et deuxième directions de déplacement.

Selon un mode de réalisation de l'invention, le module d'agitation est agencé pour maintenir l'au moins un portoir sensiblement vertical, et plus particulièrement les récipients reçus dans ledit portoir, lors de ses déplacements entre les première et deuxième positions intermédiaires.

Selon un mode de réalisation de l'invention, les première et deuxième directions de déplacement sont sensiblement parallèles.

Les modules de chargement et de déchargement comportent par exemple respectivement un premier et un deuxième convoyeurs. Les premier et deuxième convoyeurs sont avantageusement des convoyeurs à courroie ou à bande.

Selon un mode de réalisation de l'invention, la direction de guidage est sensiblement perpendiculaire aux première et deuxième directions de déplacement.

Selon un mode de réalisation de l'invention, la direction de guidage et les première et deuxième directions de déplacement sont sensiblement horizontales en conditions d'utilisation.

Selon un mode de réalisation de l'invention, les moyens de guidage sont disposés aux extrémités des modules de chargement et de déchargement.

Selon un mode de réalisation de l'invention, les moyens de guidage sont agencés pour guider latéralement en translation l'au moins un portoir entre les première et deuxième positions intermédiaires selon la direction de guidage

Selon un mode de réalisation de l'invention, le module d'agitation et les modules de chargement et de déchargement définissent un chemin de transport de portoir en forme générale de U. Avantageusement, le chemin de transport de portoir est sensiblement horizontal en conditions d'utilisation.

Avantageusement, l'axe de pivotement des moyens de guidage est sensiblement parallèle à la direction de guidage. De façon avantageuse, l'axe de pivotement des moyens de guidage est sensiblement horizontal en conditions d'utilisation.

Selon un mode de réalisation de l'invention, les moyens de guidage comportent un support de portoir délimitant un logement dans lequel est apte à coulisser l'au moins un portoir selon la direction de guidage, le support de portoir étant monté pivotant autour de l'axe de pivotement. De façon avantageuse, le logement délimité par le support de portoir est agencé pour loger simultanément une pluralité de portoirs.

Selon un mode de réalisation de l'invention, le support de portoir comporte une portion d'introduction de portoir et une portion de retrait de portoir, les moyens d'entraînement en translation étant agencés pour entraîner en translation l'au moins un portoir reçu dans le logement du support de portoir entre la portion d'introduction de portoir et la portion de retrait de portoir.

Avantageusement, le support de portoir s'étend sensiblement perpendiculairement aux modules de chargement et de déchargement.

Selon un mode de réalisation de l'invention, le support de portoir est monté pivotant autour de l'axe de pivotement entre au moins une première position angulaire dans laquelle un portoir est apte à être insérer dans ou retirer hors du support de portoir et une deuxième position angulaire décalée angulairement de la première position angulaire, l'axe de pivotement du support de portoir étant disposé en dessous du logement du support de portoir lorsque le support de portoir est dans sa première position angulaire. Ces dispositions permettent d'assurer une agitation simple et efficace des récipients contenus dans un portoir disposé dans le module d'agitation.

Avantageusement, le support de portoir s'étend sensiblement verticalement dans sa première position angulaire.

Selon un mode de réalisation de l'invention, le support de portoir comporte une surface de guidage agencée pour coopérer avec l'embase d'un portoir lors du coulissement dudit portoir dans le logement du support de portoir, l'axe de pivotement du support de portoir étant disposé en dessous de la surface de guidage lorsque le support de portoir est dans sa première position angulaire.

Selon un mode de réalisation de l'invention, le support de portoir comporte au moins une première paroi de guidage agencée pour coopérer avec une paroi latérale d'un portoir lors du coulissement dudit portoir dans le logement du support de portoir, et une paroi de retenue agencée pour coopérer avec des éléments d'obturation de récipients reçus dans ledit portoir de manière à retenir les récipients dans ledit portoir lors du pivotement du support de portoir. Une telle configuration du support de portoir assure un guidage optimal des portoirs entre les première et deuxième positions intermédiaires, tout en permettant l'utilisation de portoirs simples et peu onéreux.

Selon un mode de réalisation de l'invention, le support de portoir comporte en outre une deuxième paroi de guidage agencée pour coopérer avec une surface inférieure d'un portoir lors du coulissement dudit portoir dans le logement du support de portoir.

Selon un mode de réalisation de l'invention, la paroi de retenue est également agencée pour coopérer avec les éléments d'obturation des récipients reçus dans ledit portoir lors du coulissement dudit portoir dans le logement du support de portoir.

Selon un mode de réalisation de l'invention, la paroi de retenue comporte un orifice de passage destiné au passage d'une aiguille de prélèvement.

Selon un mode de réalisation de l'invention, les moyens de pivotement sont agencés pour entraîner en pivotement les moyens de guidage autour de l'axe de pivotement selon un débattement angulaire compris entre 0 et 160°, et par exemple entre 0 et environ 120°.

Avantageusement, le support de portoir est incliné d'un angle d'environ 120° par rapport à la verticale lorsqu'il est dans sa deuxième position angulaire.

Selon un mode de réalisation de l'invention, le module de prélèvement est disposé à proximité du module d'agitation.

Selon un mode de réalisation de l'invention, les moyens d'entraînement en translation sont agencés pour immobiliser l'au moins un portoir dans au moins une position de prélèvement disposée entre les première et deuxième positions intermédiaires, le module de prélèvement étant agencé pour prélever un échantillon de liquide biologique dans au moins un récipient reçu dans ledit portoir lorsque ledit portoir est immobilisé dans l'au moins une position de prélèvement.

De préférence, les moyens d'entraînement en translation sont agencés pour immobiliser l'au moins un portoir dans une pluralité de positions de prélèvement disposées entre les première et deuxième positions intermédiaires, chaque position de prélèvement correspondant à une position dudit portoir dans laquelle le module de prélèvement est agencé pour prélever un échantillon de liquide biologique dans l'un des récipients reçus dans ledit portoir. Par exemple, lorsque N récipients sont reçus dans le portoir, les moyens d'entraînement en translation sont agencés pour immobiliser ledit portoir dans N positions de prélèvement distinctes.

Selon un mode de réalisation de l'invention, les moyens d'entraînement en translation comportent au moins une fourche destinée à coopérer avec un portoir reçu dans le logement du support de portoir, un rail de guidage s'étendant parallèlement à la direction de guidage et sur lequel est montée coulissante la fourche, une courroie sans fin, telle qu'une courroie sans fin crantée, reliée à la fourche, et un moteur d'entraînement agencé pour entraîner la courroie sans fin.

Selon un mode de réalisation de l'invention, le module d'agitation est agencé pour immobiliser les moyens de guidage dans une position de transfert dans laquelle l'au moins un portoir est apte à être guider en translation entre les première et deuxième positions intermédiaires.

Selon un mode de réalisation de l'invention, les moyens de pivotement comportent un moteur d'entraînement, tel qu'un moteur pas à pas, couplé, par exemple par l'intermédiaire d'une courroie sans fin, telle qu'une courroie sans fin crantée, à une poulie solidaire en rotation du support de portoir et d'axe confondu avec l'axe de pivotement du support de portoir.

Selon un mode de réalisation de l'invention, le dispositif d'analyse comporte des moyens de détection agencés pour détecter l'insertion d'un portoir dans le logement du support de portoir, et des moyens de commande reliés aux moyens de détection et agencés pour initier le pivotement du support de portoir lorsque les moyens de détection ont détectés l'insertion d'un portoir dans le logement du support de portoir.

Selon un mode de réalisation de l'invention, les moyens de pivotement sont agencés pour entraîner en pivotement les moyens de guidage selon un mouvement de balancement autour de l'axe de pivotement. Les moyens de pivotement sont par exemple agencés pour générer au moins douze balancements par minutes des moyens de guidage autour de l'axe de pivotement, avec de préférence des pauses entre les balancements de telle sorte que la bulle d'air présente dans chaque récipient reçu dans le portoir puisse parcourir tout la hauteur du récipient, et ainsi provoquer un mélange optimal de l'échantillon.

Selon un mode de réalisation de l'invention, les moyens de pivotement sont agencés pour permettre un basculement du portoir entre une position dans laquelle le portoir est orienté vers le haut et une position dans laquelle le portoir est orienté vers le bas, et plus particulièrement entre une position dans laquelle les récipients reçus dans le portoir sont orientés vers le haut et une position dans laquelle les récipients reçus dans le portoir sont orientés vers le bas.

Selon l'invention, le dispositif d'analyse comprend :
- un rotor de chargement disposé entre les modules de chargement et de déchargement et d'axe de rotation sensiblement vertical, le rotor de chargement comprenant une pluralité de logements aptes à recevoir des récipients contenant des échantillons de liquide biologique à analyser ou des produits réactifs, le module de prélèvement étant agencé pour prélever des échantillons ou des produits réactifs dans les récipients reçus dans le rotor de chargement, et
- des moyens d'entraînement en rotation associés au rotor de chargement et agencés pour entraîner en rotation le rotor de chargement autour de son axe de rotation.

Selon un mode de réalisation de l'invention, le rotor de chargement est amovible.

Selon un mode de réalisation de l'invention, chaque logement prévu sur le rotor de chargement débouche dans la face supérieure du rotor de chargement.

Selon un mode de réalisation de l'invention, au moins deux logements prévus sur le rotor de chargement présentent des dimensions différentes. Ces dispositions permettent le montage de récipients de différentes dimensions sur le rotor de chargement.

Selon l'invention, le dispositif d'analyse comprend un module de préparation et de mesure comportant :
- un rotor de préparation d'axe de rotation sensiblement vertical, le rotor de préparation comprenant une pluralité de cuvettes de préparation, le module de prélèvement étant agencé pour alimenter les cuvettes de préparation en échantillons de liquide biologique ou en produits réactifs préalablement prélevés, et
- des moyens d'entraînement en rotation associés au rotor de préparation et agencés pour entraîner en rotation le rotor de préparation autour de son axe de rotation.

Chaque cuvette de préparation peut par exemple s'étendre dans un plan sensiblement perpendiculaire à un diamètre du rotor de préparation.

Selon un mode de réalisation de l'invention, le milieu de chaque cuvette de préparation passe par un diamètre du rotor de préparation.

Selon un mode de réalisation de l'invention, les cuvettes de préparation sont réparties sur la périphérie du rotor de préparation, et de préférence régulièrement réparties sur la périphérie du rotor de préparation.

Avantageusement, au moins une cuvette de préparation présente un fond arrondi dont la concavité est tournée vers le haut.

Selon un mode de réalisation de l'invention, le rotor de préparation est transparent. Par exemple, le rotor de préparation est réalisé en matière plastique transparente, telle que du polyméthacrylate de méthyle (PMMA).

Les moyens d'entraînement en rotation associés au rotor de préparation sont avantageusement agencés pour entraîner en rotation le rotor de préparation dans un premier sens et dans un deuxième sens opposé au premier sens. Les moyens d'entraînement en rotation associés au rotor de préparation sont par exemple agencés pour entraîner alternativement en rotation le rotor de préparation dans les premier et deuxième sens, par exemple à une fréquence d'oscillation correspondant à la fréquence d'oscillation naturelle du liquide contenu dans la ou les cuvettes de préparation.

Selon un mode de réalisation de l'invention, les moyens d'entraînement en rotation associés au rotor de préparation comportent un moteur pas à pas.

Selon un mode de réalisation de l'invention, le module de préparation et de mesure comprend des moyens de régulation agencés pour réguler la température des cuvettes de préparation à un niveau déterminé.

Selon un mode de réalisation de l'invention, le module de préparation et de mesure comporte au moins un poste de mesures et/ou d'analyses disposé autour du rotor de préparation. L'au moins un poste mesures et/ou d'analyses est par exemple un module de lecture spectrophotométrique, un module de lecture par fluorescence, un module de lecture par luminescence, un module de mesure de coagulation.

Selon un mode de réalisation de l'invention, le rotor de préparation comporte un corps rotatif sur lequel sont montées de manière amovible les cuvettes de préparation. Selon un mode de réalisation de l'invention, le dispositif d'analyse comporte un poste d'alimentation agencé pour alimenter le corps rotatif en cuvettes de préparation. Ces dispositions permettent notamment la réalisation de tests de coagulation sur sang total à l'aide du rotor de préparation. En effet, de tels tests impliquent la formation d'un caillot dans la cuvette de préparation difficilement lavable, et ne sont donc pas réalisables avec un rotor de préparation pourvu de cuvettes de préparation inamovibles.

Selon un mode de réalisation de l'invention, le rotor de préparation comporte un corps rotatif sur lequel sont ménagées les cuvettes de préparation.

Selon un mode de réalisation de l'invention, l'au moins un portoir comprend des fenêtres permettant une lecture optique de codes d'identification portés par les récipients reçus sur ledit portoir.

Selon un mode de réalisation de l'invention, le module de prélèvement comporte une tête de prélèvement équipée d'une aiguille de prélèvement, des premiers moyens de déplacement agencés pour déplacer la tête de prélèvement en translation suivant une direction sensiblement horizontale et perpendiculaire à la direction de guidage, et des seconds moyens de déplacement agencés pour déplacer tête de prélèvement suivant une direction sensiblement verticale.

Avantageusement, l'aiguille de prélèvement présente une pointe apte à percer les éléments d'obturation des récipients reçus dans l'au moins un portoir.

Selon un mode de réalisation de l'invention, le module de prélèvement comporte au moins un puits de rinçage apte à recevoir et rincer l'aiguille de prélèvement de la tête de prélèvement.

Selon un mode de réalisation de l'invention, les modules de chargement et de déchargement comportent des premiers et deuxièmes moyens de guidage agencés pour coopérer avec des moyens de guidage complémentaires prévus sur l'au moins un portoir. Les premiers et deuxièmes moyens de guidage comportent par exemple respectivement un première et un deuxième rails de guidage aptes à coopérer avec les moyens de guidage complémentaires prévus sur l'au moins un portoir, et plus particulièrement sur l'embase dudit portoir.

Selon un mode de réalisation de l'invention, les modules de chargement et de déchargement ont chacun une capacité de stockage d'au moins quinze portoirs.

Selon un mode de réalisation de l'invention, chaque portoir comporte une pluralité de logements sensiblement alignés dans le plan dudit portoir et destinés à recevoir l'un des récipients correspondants. De façon avantageuse, chaque logement comprend une ouverture d'introduction débouchant à l'extérieur du portoir et conformée pour permettre l'introduction du récipient correspondant dans ledit logement. Chaque récipient est de préférence monté de manière amovible dans le portoir correspondant. Selon un mode de réalisation de l'invention, chaque logement présente une section sensiblement circulaire. De façon avantageuse, chaque récipient est monté libre en rotation dans le logement correspondant.

De toute façon l'invention sera bien comprise à l'aide de la description qui suit en référence au dessin schématique annexé représentant, à titre d'exemple non limitatif, une forme d'exécution de ce dispositif d'analyse.
Figure 1 est une vue en perspective frontale d'un dispositif d'analyse selon l'invention.
Figure 2 est une vue partielle en perspective arrière du dispositif d'analyse de la figure 1.
Figure 3 est une vue à l'échelle agrandie d'un détail de la figure 2.
Figure 4 est une vue partielle en perspective de côté du dispositif d'analyse de la figure 1.
Figures 5 à 7 sont des vues partielles en perspective et de côté du dispositif d'analyse de la figure 1 montrant plus particulièrement un rotor de chargement et des modules de chargement, de déchargement et d'agitation appartenant audit dispositif d'analyse.
Figures 8 et 9 sont des vues partielles en perspective du dispositif d'analyse de la figure 1 montrant plus particulièrement le module de chargement appartenant audit dispositif d'analyse.
Figure 10 est une vue partielle de dessus du dispositif d'analyse de la figure 1 montrant plus particulièrement le parcours des portoirs entre une position de chargement et une position de déchargement.
Figure 11 est une vue partielle en perspective du dispositif d'analyse de la figure 1 montrant plus particulièrement le module d'agitation appartenant audit dispositif d'analyse.
Figure 12 est une vue à l'échelle agrandie d'un détail de la figure 11.
Figure 13 est une vue partielle en perspective du dispositif d'analyse de la figure 1 montrant plus particulièrement des moyens d'entraînement en translation appartenant audit dispositif d'analyse.
Figure 14 est une vue à l'échelle agrandie d'un détail de la figure 13.
Figures 15 à 18 sont des vues partielles en perspective du dispositif d'analyse de la figure 1 montrant différentes positions de la tête de prélèvement d'un module de prélèvement appartenant audit dispositif d'analyse.
Figure 19 est une vue de dessus d'un rotor de préparation appartenant au dispositif d'analyse de la figure 1.
Figures 20 et 21 sont des vues en coupe respectivement selon les lignes XX-XX et XXI-XXI de la figure 19.
Figure 22 est une vue schématique montrant le mouvement du liquide dans une cuvette de préparation du rotor de préparation lorsque que le rotor de préparation est animé de mouvements alternatifs de faible amplitude.

La description ci-après est donnée à titre d'exemple d'un mode de réalisation de l'invention et n'a pas de caractère limitatif.

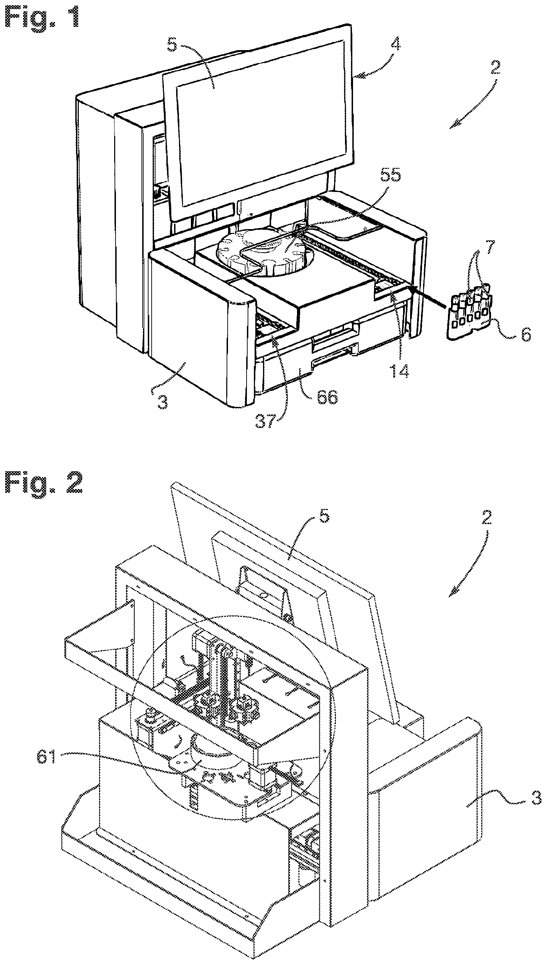

La figure 1 représente un dispositif d'analyse 2 pour diagnostic in vitro, et plus particulièrement pour réaliser des tests sanguins, tels que de tests sur sang total.

Le dispositif d'analyse 2 comprend un châssis 3, une interface de communication et de visualisation 4 montée sur le châssis 3, et une électronique embarquée (non représentée sur les figures) logée dans le châssis 3.

L'interface de communication et de visualisation 4 comporte par exemple un écran tactile 5 relié à un ordinateur de type PC. L'ordinateur de type PC est plus particulièrement agencé pour enregistrer des demandes d'analyses chargées manuellement par un opérateur à l'aide de écran tactile 5 ou provenance d'une unité centrale d'un laboratoire d'analyse, pour envoyer des requêtes d'analyse à l'électronique embarquée, pour récupérer des données mesurées, les traiter grâce à des algorithmes spécifiques, et mettre les résultats à disposition de l'opérateur.

Comme montré plus particulièrement sur les figures 1, 4 et 8, le dispositif d'analyse 2 comprend une pluralité de portoirs 6, également appelés casiers ou cassettes, destinés à recevoir chacun une pluralité de récipients 7 équipés d'éléments d'obturation 8 et contenants des échantillons de liquide biologique à analyser, tels que des échantillons de sang. Avantageusement, les récipients 7 sont des tubes d'échantillon.

Chaque portoir 6 présente une forme générale parallélépipédique et comporte une pluralité de logements 9, de préférence cylindriques, alignés dans le plan d'extension dudit portoir 6. Les logements 9 sont ouverts vers le haut afin de permettre une introduction et un retrait aisés des récipients 7 dans et hors des logements 9. De préférence, chaque logement 9 est conformé de telle sorte que le récipient 7 correspondant est monté libre en rotation dans ledit logement 9.

Chaque portoir 6 comprend également une première série de fenêtres 11 permettant une lecture optique de codes d'identification portés par les récipients 7, et une deuxième série de fenêtres 12 permettant une visualisation du contenu desdites récipients 7.

L'embase de chaque portoir 6 comprend en outre une encoche transversale 13 dont la fonction sera explicitée ci-après.

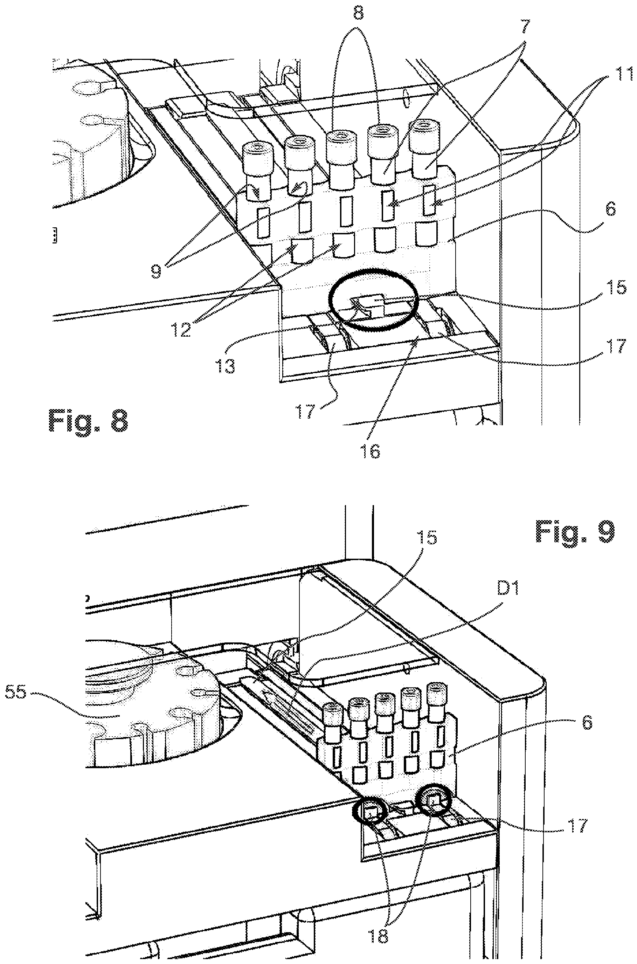

Comme montré sur la figure 8, chaque portoir 6 est prévu pour recevoir cinq récipients 7. Cependant, chaque portoir 6 pourrait être prévu pour recevoir moins ou plus de cinq récipients 7.

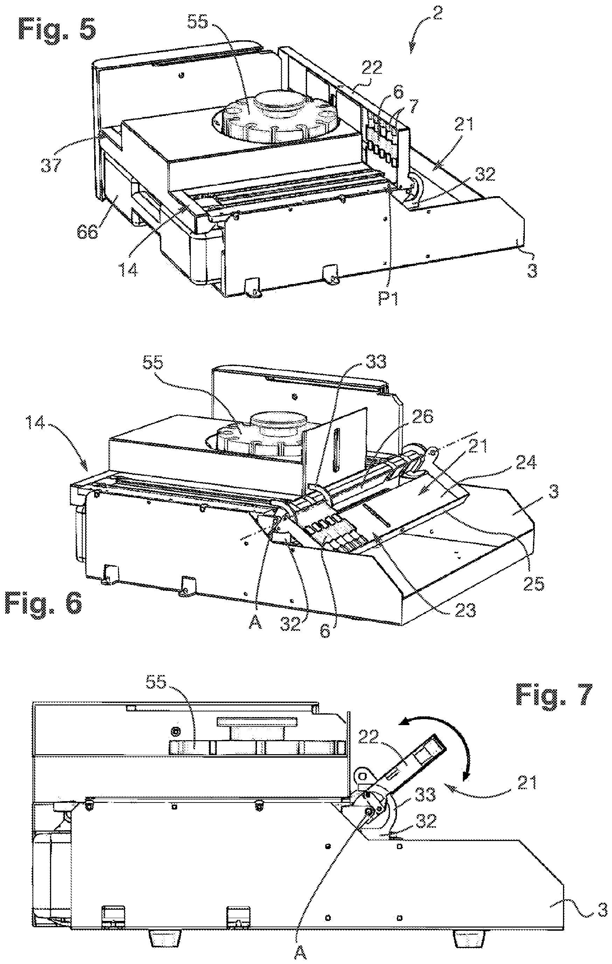

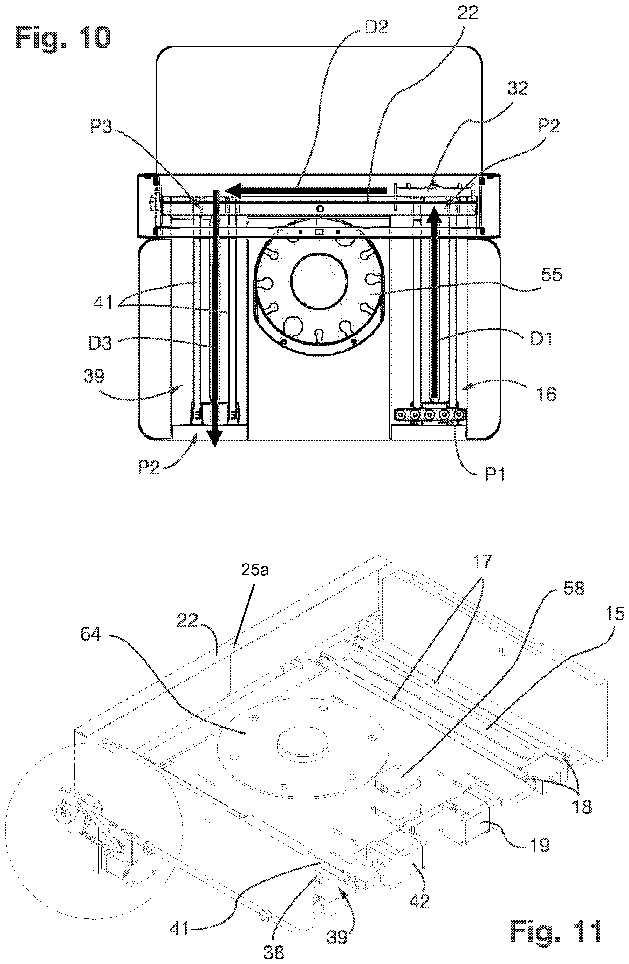

Le dispositif d'analyse 2 comprend en outre un module de chargement 14 agencé pour déplacer chaque portoir 6 chargé dans le module de chargement 14 entre une position de chargement P1 (voir la figure 5) et une première position intermédiaire P2 (voir la figure 10) selon une première direction de déplacement D1 horizontale et perpendiculaire au plan d'extension dudit portoir 6.

Le module de chargement 14 comprend un rail de guidage 15 s'étendant parallèlement à la première direction de déplacement D1 et agencé pour coopérer avec l'encoche transversale 13 de chaque portoir 6 chargé dans le module de chargement 14 de manière à guider en translation ledit portoir lors de ses déplacements entre la position de chargement P1 et la première position intermédiaire P2. Avantageusement, le rail de guidage 15 présente une section en queue d'aronde et l'encoche transversale 13 de chaque portoir 6 présente une forme complémentaire.

Le module de chargement 14 comprend de plus un convoyeur 16 comprenant deux courroies de convoyage 17 équipée chacune d'une pluralité de doigts d'entraînement 18 (montrés sur la figure 9) agencés pour coopérer avec l'embase de chaque portoir 6 chargé dans le module de chargement 14 de manière à entraîner en translation ledit portoir entre la position de chargement P1 et la première position intermédiaire P2.

Les deux courroies de convoyage 17 sont entraînées par un moteur 19 monté sur le châssis 3 et plus particulièrement représenté sur la figure 11.

Le dispositif d'analyse 2 comprend également un module d'agitation 21 comprenant un support de portoir 22 agencé pour guider en translation au moins un portoir entre la première position intermédiaire P2 et une deuxième position intermédiaire P3 selon une direction de guidage D2 horizontale et perpendiculaire à la première direction de déplacement D1.

Le support de portoir 22 délimite un logement 23 dans lequel est apte à être introduit, de préférence intégralement, au moins un portoir 6, et par exemple jusqu'à trois portoirs 6 simultanément.

Le support de portoir 22 comporte au moins une première paroi de guidage 24 agencée pour coopérer avec une paroi latérale d'un portoir 6 introduit dans le logement 23, une deuxième paroi de guidage 25 agencée pour coopérer avec les éléments d'obturation 8 des récipients 7 reçus dans le portoir, et une troisième paroi de guidage 26 agencée pour coopérer avec une surface inférieure du portoir 6. La deuxième paroi de guidage 25 est plus particulièrement agencée pour coopérer avec les éléments d'obturation 8 des récipients 7 reçus dans le portoir 6 de manière à retenir les récipients 7 dans le portoir 6 lors du pivotement du support de portoir 22, et forme ainsi également une paroi de retenue. La deuxième paroi de guidage 25 comporte en outre un orifice de passage 25a destiné au passage d'une aiguille de prélèvement.

Le support de portoir 22 est monté pivotant par rapport au châssis 3 autour d'un axe de pivotement A horizontal et parallèle à la direction de guidage D2.

Le module d'agitation 21 comprend également des moyens de pivotement agencés pour entraîner en pivotement le support de portoir 22 autour de l'axe de pivotement A entre une première position angulaire dans laquelle le support de portoir 22 s'étend verticalement (voir la figure 5) et une deuxième position angulaire (voir la figure 6) dans laquelle le support de portoir 22 est incliné par rapport à la verticale. Les moyens de pivotement sont plus particulièrement agencés pour entraîner en pivotement le support de portoir 22 autour de l'axe de pivotement A selon un débattement angulaire compris entre 0 et 160°, et par exemple entre 0 et environ 120°. Comme montré sur les figures 5 et 6, les moyens de pivotement sont agencés pour permettre un basculement d'un portoir 6 chargé dans le module d'agitation 21 entre une position dans laquelle les récipients 7 reçus dans le portoir 6 sont orientés vers le haut et une position dans laquelle les récipients 7 reçus dans le portoir 6 sont orientés vers le bas.

Les moyens de pivotement sont agencés pour entraîner en pivotement le support de portoir 22 selon un mouvement de balancement autour de l'axe de pivotement A. Les moyens de pivotement sont par exemple agencés pour générer au moins douze balancements par minutes du support de portoir 22 autour de l'axe de pivotement A, avec de préférence des pauses entre les balancements de telle sorte que la bulle d'air présente dans chaque récipient 7 reçu dans un portoir 6 chargé dans le module d'agitation 21 puisse parcourir tout la hauteur du récipient 7, et ainsi provoquer un mélange optimal de l'échantillon contenu dans le récipient.

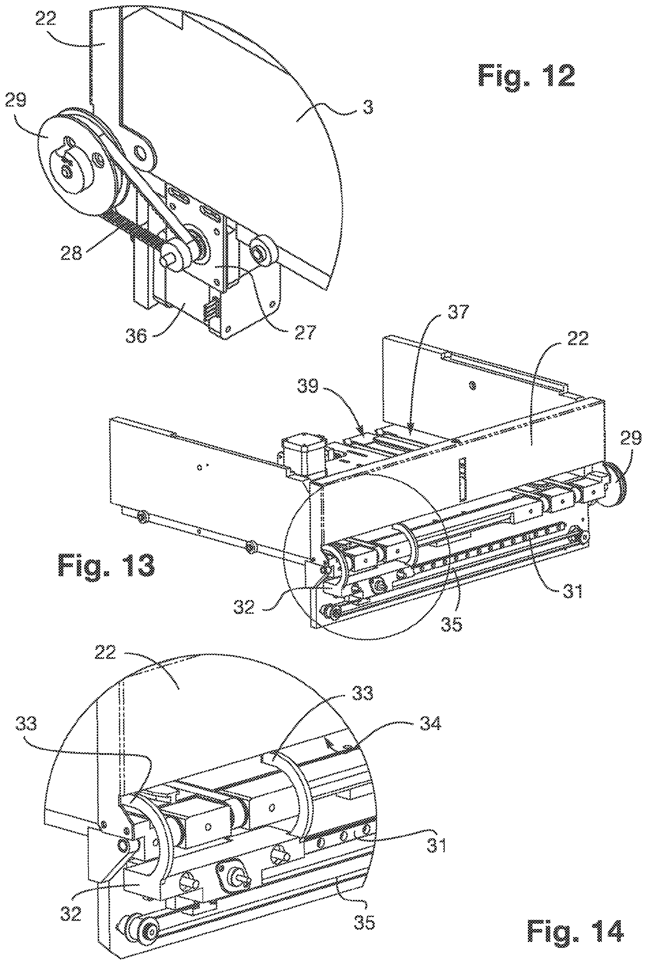

Selon le mode de réalisation représenté aux figures, les moyens de pivotement comportent un moteur pas à pas 27 (voir la figure 12) dont l'arbre de sortie est couplé, par exemple par l'intermédiaire d'une courroie sans fin 28, telle qu'une courroie sans fin crantée, à une poulie 29 solidaire en rotation du support de portoir 22 et d'axe confondu avec l'axe de pivotement A.

Le module d'agitation 21 comprend de plus des moyens d'entraînement en translation agencés pour entraîner en translation un portoir 6 chargé dans le module d'agitation 21 entre les première et deuxième positions intermédiaires P2, P3 selon la direction de guidage D2.

Selon le mode de réalisation représenté aux figures, les moyens d'entraînement en translation comportent (voir les figures 13 et 14) notamment un rail de guidage 31 monté sur le châssis 3 et s'étendant parallèlement à la direction de guidage D2, et une fourche 32 montée coulissante sur le rail de guidage 31 et destinée à coopérer avec un portoir 6 reçu dans le logement 23 du support de portoir 22. La fourche 32 comprend notamment deux branches 33 parallèles écartées l'une par rapport à l'autre d'une distance correspondant sensiblement à la longueur d'un portoir 6, et destinées à s'étendre à travers une lumière de passage 34 ménagée sur le support de portoir 22.

Les moyens d'entraînement en translation comportent également une courroie sans fin 35, telle qu'une courroie sans fin crantée, reliée à la fourche 32, et un moteur d'entraînement 36 (voir la figure 12) dont l'arbre de sortie est pourvu d'un pignon, de préférence cranté, agencé pour entraîner la courroie sans fin 35.

Selon un mode de réalisation de l'invention, la fourche est pourvue de moyens de détection optique agencés pour détecter l'insertion d'un portoir 6 dans le logement 23 du support de portoir 22, et le dispositif d'analyse 2 est pourvu de moyens de commande reliés aux moyens de détection et agencés pour initier le pivotement du support de portoir 22 lorsque les moyens de détection ont détectés l'insertion d'un portoir 6 dans le logement 23.

Le support de portoir 22 et les moyens d'entraînement en translation sont de préférence agencés pour maintenir chaque portoir 6 sensiblement vertical lors de ses déplacements selon la direction de guidage D2.

Le dispositif d'analyse 2 comprend en outre un module de déchargement 37 agencé pour déplacer un portoir 6 entre la deuxième position intermédiaire P3 et une position de déchargement P4 selon une deuxième direction de déplacement D3 horizontale et perpendiculaire au plan d'extension dudit portoir 6. La deuxième direction de déplacement D3 est avantageusement parallèle à la première direction de déplacement D1 et perpendiculaire à la direction de guidage D2.

Le module de déchargement 37 est sensiblement identique au module de chargement 14. Ainsi, le module de déchargement 37 comporte également un rail de guidage 38 s'étendant parallèlement à la deuxième direction de déplacement D2 et agencé pour coopérer avec l'encoche transversale 13 de chaque portoir 6 chargé dans le module de déchargement 37 de manière à guider en translation ledit portoir lors de ses déplacements entre la deuxième position intermédiaire P3 et la position de déchargement P4. Le module de déchargement 37 comporte en outre un convoyeur 39 comprenant deux courroies de convoyage 41 équipée chacune d'une pluralité de doigts d'entraînement. Les deux courroies de convoyage 41 sont entraînées par un moteur 42 monté sur le châssis 3 et plus particulièrement représenté sur la figure 11.

Comme montré sur la figure 10, les modules d'agitation 21, de chargement 14 et de déchargement 37 définissent un chemin de transport de portoir sensiblement horizontal en forme générale de U. Une telle configuration des modules de chargement et de déchargement 14, 37 permet d'assurer un chargement et un déchargement automatiques des portoirs 6 dans et hors du dispositif d'analyse 2 par exemple en disposant des convoyeurs de chargement et de déchargement en regard respectivement des modules de chargement et de déchargement 14, 37.

Les moyens d'entraînement en translation sont en outre agencés pour immobiliser verticalement chaque portoir reçu dans le module d'agitation 21 dans une pluralité de positions de prélèvement disposées entre les première et deuxième positions intermédiaires P2, P3, et plus particulièrement dans autant de positions de prélèvement que de récipients 7 reçus dans ledit portoir 6.

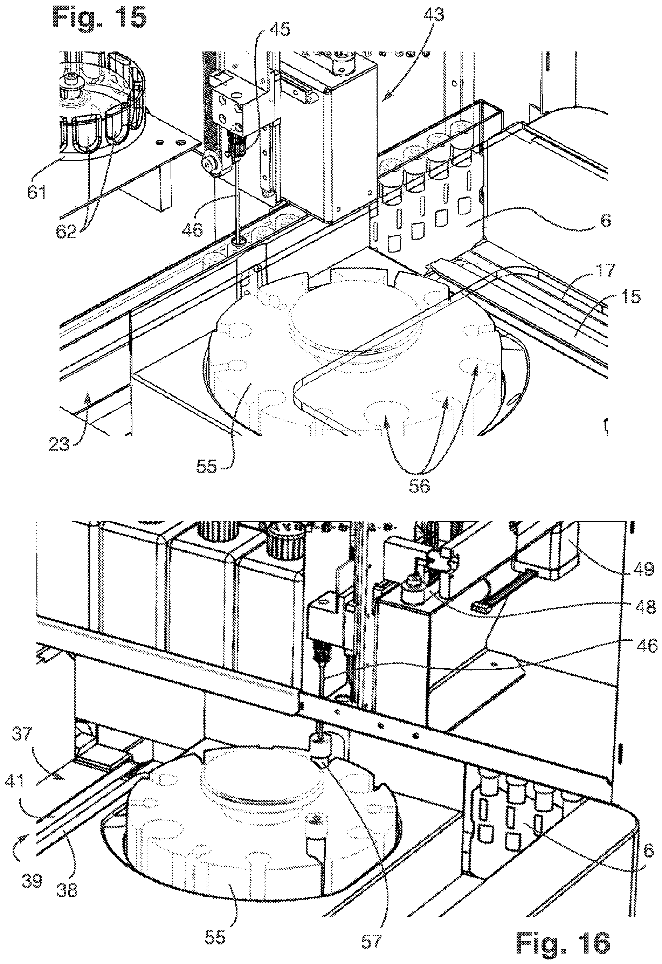

Le dispositif d'analyse 2 comprend de plus un module de prélèvement 43 disposé à proximité du module d'agitation 21 (voir les figures 16 à 18). Le module de prélèvement 43 est agencé pour prélever des échantillons de liquide biologique dans les récipients 7 reçus dans chaque portoir 6 chargé dans le module d'agitation 21. En particulier, dans chaque position de prélèvement d'un portoir 6 chargé dans le module d'agitation 21, le module de prélèvement 43 est agencé pour prélever un échantillon de liquide biologique dans l'un des récipients reçus dans ledit portoir 6.

Le module de prélèvement 43 comporte notamment un support de prélèvement 44, et une tête de prélèvement 45 montée sur le support de prélèvement 44 et équipée d'une aiguille de prélèvement 46, l'aiguille de prélèvement 46 présentant une pointe apte à percer les éléments d'obturation 8 des récipients 7 reçus dans chaque portoir 6. Le module de prélèvement 43 comporte en outre des premiers moyens de déplacement agencés pour déplacer la tête de prélèvement 44 en translation suivant une direction horizontale et perpendiculaire à la direction de guidage D2, et des seconds moyens de déplacement agencés pour déplacer tête de prélèvement 44 suivant une direction verticale.

Comme montré sur la figure 15, les premiers moyens de déplacement comprennent :
- un rail de guidage 47 monté sur le châssis et s'étendant horizontalement et perpendiculairement à la direction de guidage D2, le support de prélèvement 44 étant monté coulissant sur le rail de guidage 47,
- une courroie sans fin 48, de préférence crantée, reliée au support de prélèvement 44 et agencée pour entraîner en coulissement ce dernier le long du rail de guidage 47, et
- un moteur d'entraînement 49 dont l'arbre de sortie est pourvu d'un pignon, de préférence cranté, agencé pour entraîner la courroie sans fin 48.

Comme montré également sur la figure 15, les deuxièmes moyens de déplacement comprennent :
- un rail de guidage 51 monté sur le support de prélèvement 44 et s'étendant verticalement, la tête de prélèvement 45 étant montée coulissante sur le rail de guidage 51,
- une courroie sans fin 52, de préférence crantée, reliée à la tête de prélèvement 45 et agencée pour entraîner en coulissement cette dernière le long du rail de guidage 51, et
- un moteur d'entraînement 53 dont l'arbre de sortie est pourvu d'un pignon, de préférence cranté, agencé pour entraîner la courroie sans fin 52.

Le module de prélèvement 43 comporte de plus un puits de rinçage 54 apte à recevoir et rincer l'aiguille de prélèvement 46 de la tête de prélèvement 45.

Avantageusement, le module de prélèvement 43 pourrait en outre comprendre des moyens de détection de niveau. De tels moyens de détection permettent d'une part d'éviter de plonger systématiquement l'aiguille de prélèvement presqu'au fond des récipients comme le font la plupart des analyseurs d'hématologie, ce qui contamine la quasi-totalité de la longueur de l'aiguille de prélèvement, et d'autre part de pouvoir pipeter des produits réactifs dans les flacons avec précision. Les moyens de détection de niveau peuvent par exemple comporter un système de détection capacitif.

Comme montré plus particulièrement sur les figures 15 et 16, le dispositif d'analyse 2 comprend un rotor de chargement 55 disposé entre les modules de chargement et de déchargement 14, 37 et d'axe de rotation sensiblement vertical. Le rotor de chargement 55 comprend une pluralité de logements 56 aptes à recevoir des récipients 57 contenant des échantillons de liquide biologique à analyser ou des produits réactifs. Chaque logement 56 prévu sur le rotor de chargement 55 débouche dans la face supérieure du rotor de chargement 55 afin de permettre une introduction et un retrait aisés des récipients 57 dans et hors du rotor de chargement 55. Selon le mode de réalisation représenté sur les figures, le rotor de chargement comprend des logements 56 présentant des dimensions différentes afin de permettre le montage de récipients 57 de différentes dimensions sur le rotor de chargement 55.

Le dispositif d'analyse 2 comprend également des moyens d'entraînement en rotation associés au rotor de chargement 55 et agencés pour entraîner en rotation le rotor de chargement 55 autour de son axe de rotation. Les moyens d'entraînement en rotation associés au rotor de chargement 55 comportent par exemple un moteur d'entraînement 58, tel qu'un moteur pas à pas, visible sur la figure 11.

Comme montré sur la figure 16, le module de prélèvement 43 est agencé pour prélever, à l'aide de la tête de prélèvement 45, des échantillons ou des produits réactifs dans les récipients 57 reçus dans le rotor de chargement 55.

Le rotor de chargement 55 permet de charger manuellement et à tout moment dans le dispositif d'analyse, des récipients 57 contenant des échantillons à analyser et qui devront être agités manuellement au préalable, et/ou des flacons de produits réactifs.

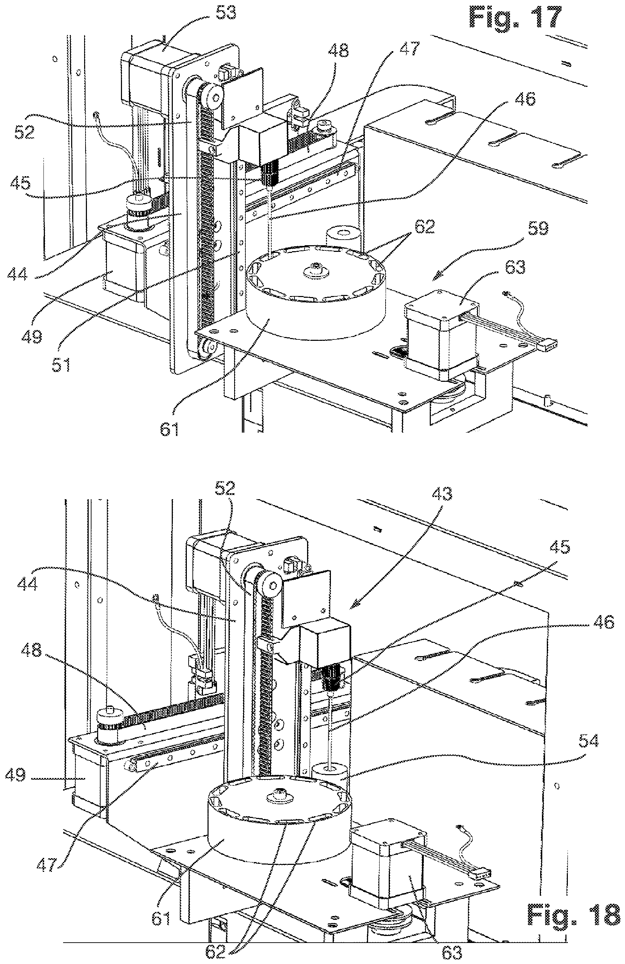

Comme montré plus particulièrement sur les figures 17 et 18, le dispositif d'analyse 2 comprend en outre un module de préparation et de mesure 59 disposé à l'intérieur du châssis 3.

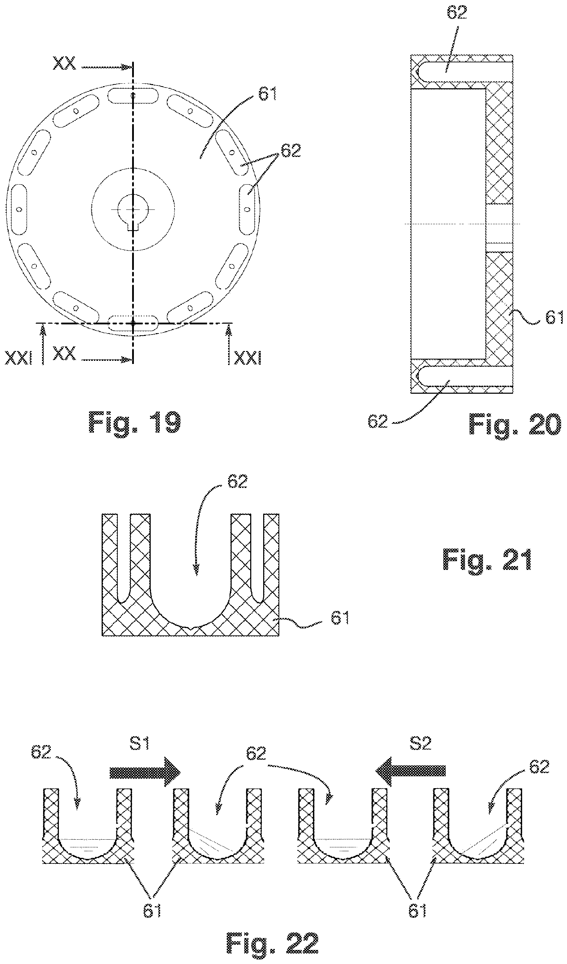

Le module de préparation et de mesure 59 comporte notamment un rotor de préparation 61 d'axe de rotation sensiblement vertical. Comme montré plus particulièrement sur les figures 19 à 22, le rotor de préparation 61 comprend une pluralité de cuvettes de préparation 62 régulièrement réparties sur la périphérie du rotor de préparation 61.

Comme montré sur la figure 17, le module de prélèvement 43 est agencé pour alimenter les cuvettes de préparation 62 en échantillons de liquide biologique ou en produits réactifs à l'aide de la tête de prélèvement 45. Avantageusement, la position de la tête de prélèvement 45 lors de l'alimentation des cuvettes de préparation 62 est alignée avec les positions de la tête de prélèvement 45 respectivement lors du prélèvement de liquide dans un récipient 57 reçu dans le rotor de chargement 55, lors du prélèvement d'échantillons dans un récipient 7 reçu dans un portoir 6, et lors du rinçage de l'aiguille de prélèvement 46.

Chaque cuvette de préparation 62 s'étend avantageusement dans un plan perpendiculaire à un diamètre du rotor de préparation 61 et le milieu de chaque cuvette de préparation 62 passe par le diamètre correspondant du rotor de préparation 61.

Selon le mode de réalisation représenté aux figures, le rotor de préparation 61 comporte un corps rotatif sur lequel sont ménagées les cuvettes de préparation 62. Cependant, selon une variante de réalisation non représentée sur les figures, le rotor de préparation 61 pourrait comporter un corps rotatif sur lequel sont montées de manière amovible les cuvettes de préparation. Selon une telle variante de réalisation, le dispositif d'analyse 2 comporterait un poste d'alimentation agencé pour alimenter le corps rotatif en cuvettes de préparation.

Comme montré sur les figures 20 et 21, chaque cuvette de préparation 62 présente un fond arrondi dont la concavité est tournée vers le haut.

Le module de préparation et de mesure 59 comporte en outre des moyens d'entraînement en rotation associés au rotor de préparation 61. Ces moyens d'entraînement en rotation sont avantageusement agencés pour entraîner en rotation le rotor de préparation 61 autour de son axe de rotation alternativement dans un premier sens et dans un deuxième sens opposé au premier sens, par exemple à une fréquence d'oscillation correspondant à la fréquence d'oscillation naturelle du liquide contenu dans les cuvettes de préparation 62.

Selon le mode de réalisation représenté aux figures, les moyens d'entraînement en rotation associés au rotor de préparation 61 comportent un moteur pas à pas 63 plus particulièrement visible sur la figure 17.

Le module de préparation et de mesure 59 peut comporter avantageusement des moyens de régulation agencés pour réguler la température des cuvettes de préparation 62 à un niveau déterminé. Comme montré sur la figure 11, les moyens de régulation peuvent comporter notamment une platine métallique thermiquement conductrice 64 disposée sous le rotor de préparation 61 et des moyens de chauffage agencée pour chauffée la platine métallique thermiquement conductrice 64.

Le rotor de préparation 61 est par exemple réalisé en matière plastique transparente, telle que du polyméthacrylate de méthyle (PMMA). Ces dispositions permettent d'effectuer différentes mesures à travers la matière du rotor de préparation 61, telles que des mesures de photométrie.

Ainsi, le dispositif d'analyse comprend avantageusement au moins un poste de mesure disposé autour du rotor de préparation 61, telle qu'un poste de mesure photométrique adapté pour mesurer notamment le taux d'hémoglobine dans l'échantillon à analyser, ou encore le taux de D-dimères ou de CRP dans l'échantillon à analyser.

Le dispositif d'analyse 2 pourrait en outre comprendre également un module de lecture spectrophotométrique, un module de lecture par fluorescence, un module de lecture par luminescence ou encore un module de mesure de coagulation disposés autour du rotor de préparation 61.

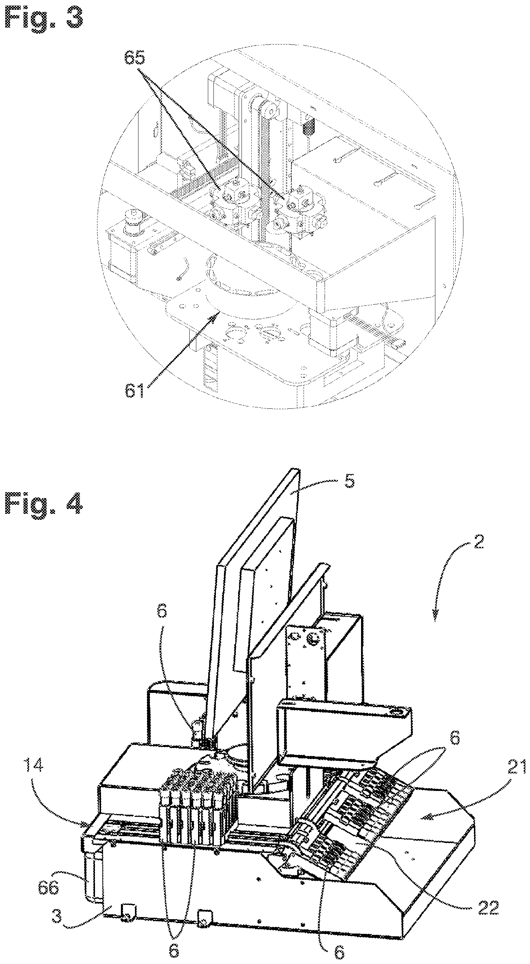

Comme montré sur la figure 3, le dispositif d'analyse 2 peut en outre comporter une ou plusieurs têtes de mesure cytométriques 65 qui permettent d'effectuer avec précision toutes les mesures d'hématologie relatives à la numération formule sanguine. Le dispositif d'analyse 2 pourrait par exemple comporter une première tête de mesure cytométrique 65 pour effectuer des mesures de globules rouges ou plaquettes, et une deuxième tête de mesure cytométrique 65 pour effectuer des mesures de globules blancs. Ces dispositions permettent d'effectuer des mesures en parallèle, et donc d'augmenter la cadence d'analyse du dispositif d'analyse 2 selon l'invention.

Il doit être noté que dispositif d'analyse 2 comporte également un bidon plat 66 disposé sous les modules de chargement et de déchargement 14, 37, et destiné à contenir du liquide isotonique de dilution faisant office de liquide système. Le bidon plat 66 est avantageusement pourvu d'un bouchon en caoutchouc percé automatiquement en fin de course par un organe de perçage approprié, ce qui met à la fois le liquide système à disposition du dispositif d'analyse 2, mais aussi permet la mise à l'air libre. Avantageusement, le liquide système sera chauffé par des dispositifs connus. Le bidon destiné à accueillir de liquide usagé n'est pas représenté sur les figures.

Le fonctionnement du dispositif d'analyse 2 est le suivant.

Des portoirs 6 pourvus de récipients 7 contenant des échantillons de liquide biologique à analyser sont chargés manuellement ou automatique dans le module de chargement 14. Ces portoirs 6 sont successivement amenés jusqu'au support de portoir 22 en vue de leur agitation à l'aide du module d'agitation 21.

Après agitation, chaque portoir 6 est ensuite déplacé dans une première position de prélèvement. La tête de prélèvement 45 du module de prélèvement 43 est alors déplacée de telle sorte que l'aiguille de prélèvement 46 traverse l'orifice de passage 25a prévu sur la deuxième paroi de guidage 25 et prélève un volume prédéterminé d'échantillon de liquide biologique à analyser dans un premier récipient 7 reçu dans le portoir 6 immobilisé dans la première position de prélèvement. Lors du retrait de l'aiguille de prélèvement 46 hors du premier récipient 7, la deuxième paroi de guidage 25, qui coopère avec l'élément d'obturation 8 du premier récipient 7, maintient le premier récipient 7 dans le logement 23 du support de portoir 22.

La tête de prélèvement 45 du module de prélèvement 43 est ensuite déplacée de telle sorte que l'aiguille de prélèvement 46 introduise le volume prédéterminé d'échantillon dans une cuvette de préparation 62 du rotor de préparation 61. Puis, du liquide système prélevé à partir du bidon plat 66 est introduit, à l'aide d'un poste d'alimentation approprié, dans ladite cuvette de préparation 62 afin de réaliser une première dilution du liquide biologique à analyser.

Afin d'assurer un mélange homogène du liquide système et du liquide biologique à analyser, le rotor de préparation est mis en rotation autour de son axe de rotation alternativement dans un premier sens S1 et dans un deuxième sens S2 opposé au premier sens S1, selon une fréquence d'oscillation correspondant sensiblement à la fréquence d'oscillation naturelle du mélange contenu dans la cuvette de préparation 62.

De tels mouvements alternatifs de rotation du rotor de préparation 61 engendrent des mouvements des liquides contenus dans la cuvette de préparation 62 tels que montrés sur la figure 22 et assurent un mélange optimal de ces liquides, et ce du fait de la disposition des cuvettes de préparation 62 par rapport à l'axe de rotation du rotor de préparation et de la forme des cuvettes de préparation 62. Il doit être noté que les parois latérales des cuvettes de préparation sont suffisamment hautes pour éviter des débordements de liquides lors de ces oscillations.

Si nécessaire, le mélange obtenu est aspiré par l'aiguille de prélèvement 46 et distribué dans une cuvette de préparation 62 vide, par exemple pour réaliser une deuxième dilution. Quand l'étape de dilution est achevée, le rotor de préparation est entraîné en rotation afin de positionner la cuvette de préparation 62 contenant le mélange à analyser en regard d'un poste de distribution des réactifs de Lyse pour obtenir les solutions prêtes pour effectuer des mesures hématologiques.

Lorsque les différentes mesures à effectuer sur l'échantillon concerné sont effectuées, les différentes cuvettes de préparation 62 sont rincées à l'aide d'un poste de rinçage approprié si elles sont inamovibles, ou elles sont remplacées par d'autres cuvettes de préparation si elles sont jetables, en vue de l'analyse d'un autre récipient 7 reçu dans le portoir 6 en position de prélèvement.

Lorsque l'échantillon contenu dans le premier récipient 7 précité a été analysé, les moyens d'entraînement en translation déplacent le portoir 6 correspondant dans une deuxième position de prélèvement, de manière à permettre le prélèvement d'un échantillon dans un deuxième récipient 7 logé dans ledit portoir 6 et d'effectuer à l'aide du module de prélèvement 43, et l'analyse de cet échantillon. Ces étapes sont répétées de manière à permettre l'analyse des échantillons contenus dans les différents récipients 7 reçus dans le portoir 6.

Lorsque les échantillons contenus dans les différents récipients 7 logés dans le portoir 6 disposé ont été analysés, le portoir 6 est déplacé dans la deuxième position intermédiaire P3 en vue de son déchargement à l'aide du module de déchargement 37. Cependant, si nécessaire, le portoir 6 peut être ramené dans une position de prélèvement en inversant le sens de fonctionnement des moteurs d'entraînement 36, 42 afin d'effectuer une nouvelle analyse d'un échantillon contenu dans l'un des récipients logés dans ledit portoir 6.

Par ailleurs, le dispositif d'analyse 2 permet de réaliser des analyses spécifiques ou urgentes à l'aide du rotor de chargement 55 en y plaçant des récipients 57 contenant des échantillons de liquide biologique à analyser ou des produits réactifs spécifiques. Dans un tel cas, le rotor de chargement 55 est entraîné en rotation pour disposer le récipient 57 souhaité dans une position prédéterminée (voir la figure 16) permettant un prélèvement du liquide contenu dans ce dernier à l'aide de l'aiguille de prélèvement 46, ce liquide étant alors introduit dans une cuvette de préparation 62 du rotor de préparation 61.

## Revendications

1. Dispositif d'analyse (2) pour diagnostic in vitro, comprenant :
- au moins un portoir (6) destiné à recevoir une pluralité de récipients (7) équipés d'éléments d'obturation (8) et contenants des échantillons de liquide biologique à analyser,
- un module de chargement (14) agencé pour déplacer l'au moins un portoir (6) entre une position de chargement (P1) et une première position intermédiaire (P2) selon une première direction de déplacement (D1) transversale au plan de l'au moins un portoir,
- un module d'agitation (21) agencé pour déplacer l'au moins un portoir (6) entre la première position intermédiaire (P2) et une deuxième position intermédiaire (P3) et pour agiter l'au moins un portoir (6), le module d'agitation étant agencé de telle sorte que l'au moins un portoir s'étend sensiblement selon une même orientation dans les première et deuxième positions intermédiaires, le module d'agitation (21) comportant :
- des moyens de guidage agencés pour guider en translation l'au moins un portoir (6) entre les première et deuxième positions intermédiaires selon une direction de guidage (D2),
- des moyens d'entraînement en translation agencés pour entraîner en translation l'au moins un portoir (6) entre les première et deuxième positions intermédiaires selon ladite direction de guidage, et
- un module de déchargement (37) agencé pour déplacer l'au moins un portoir (6) entre la deuxième position intermédiaire (P3) et une position de déchargement (P4) selon une deuxième direction de déplacement (D3) transversale au plan de l'au moins un portoir, et
- un module de prélèvement (43) agencé pour prélever des échantillons de liquide biologique dans les récipients (7) reçus dans l'au moins un portoir (6),
**caractérisé en ce que** le module d'agitation (21) comporte en outre des moyens de pivotement agencés pour entraîner en pivotement les moyens de guidage autour d'un axe de pivotement (A), et **en ce que** le dispositif d'analyse comprend en outre :
∘ un rotor de chargement (55) disposé entre les modules de chargement et de déchargement (14, 37) et d'axe de rotation sensiblement vertical, et des moyens d'entraînement en rotation associés au rotor de chargement (55) et agencés pour entraîner en rotation le rotor de chargement autour de son axe de rotation, le rotor de chargement (55) comprenant une pluralité de logements (56) aptes à recevoir des récipients (57) contenant des échantillons de liquide biologique à analyser ou des produits réactifs, le module de prélèvement (43) étant agencé pour prélever des échantillons ou des produits réactifs dans les récipients (57) reçus dans le rotor de chargement (55),
et/ou
∘ un module de préparation et de mesure (59) comportant :
- un rotor de préparation (61) d'axe de rotation sensiblement vertical, le rotor de préparation (61) comprenant une pluralité de cuvettes de préparation (62), le module de prélèvement (43) étant agencé pour alimenter les cuvettes de préparation (62) en échantillons de liquide biologique ou en produits réactifs préalablement prélevés, et
- des moyens d'entraînement en rotation associés au rotor de préparation (61) et agencés pour entraîner en rotation le rotor de préparation autour de son axe de rotation.

2. Dispositif d'analyse selon la revendication 1, dans lequel les modules de chargement et de déchargement (14, 37) sont agencés pour maintenir l'au moins un portoir (6) sensiblement vertical lors de ses déplacements selon les première et deuxième directions de déplacement.

3. Dispositif d'analyse selon la revendication 1 ou 2, dans lequel le module d'agitation (21) est agencé pour maintenir l'au moins un portoir (6) sensiblement vertical lors de ses déplacements entre les première et deuxième positions intermédiaires.

4. Dispositif d'analyse selon l'une des revendications 1 à 3, dans lequel le module d'agitation (21) et les modules de chargement et de déchargement (14, 37) définissent un chemin de transport de portoir en forme générale de U.

5. Dispositif d'analyse selon l'une des revendications 1 à 4, dans lequel les modules de chargement et de déchargement (14, 37) comportent respectivement un premier et un deuxième convoyeurs (16, 39).

6. Dispositif d'analyse selon l'une des revendications 1 à 5, dans lequel les moyens de guidage comportent un support de portoir (22) délimitant un logement (23) dans lequel est apte à coulisser l'au moins un portoir (6) selon la direction de guidage, le support de portoir étant monté pivotant autour de l'axe de pivotement (A).

7. Dispositif d'analyse selon la revendication 6, dans lequel le support de portoir (22) comporte au moins une première paroi de guidage (24) agencée pour coopérer avec une paroi latérale d'un portoir (6) lors du coulissement dudit portoir dans le logement (23) du support de portoir, et une paroi de retenue (25) agencée pour coopérer avec des éléments d'obturation (8) de récipients (7) reçus dans ledit portoir (6) de manière à retenir les récipients (7) dans ledit portoir (6) lors du pivotement du support de portoir (22).

8. Dispositif d'analyse selon l'une des revendications 1 à 7, dans lequel chaque cuvette de préparation (62) s'étend dans un plan sensiblement perpendiculaire à un diamètre du rotor de préparation (61).

9. Dispositif d'analyse selon l'une des revendications 1 à 8, dans lequel au moins une cuvette de préparation (62) présente un fond arrondi dont la concavité est tournée vers le haut.

10. Dispositif d'analyse selon l'une des revendications 1 à 9, dans lequel les moyens d'entraînement en rotation associés au rotor de préparation (61) sont agencés pour entraîner en rotation le rotor de préparation dans un premier sens (S1) et dans un deuxième sens (S2) opposé au premier sens.

## Patentansprüche

1. Analysevorrichtung (2) für In-vitro-Diagnostik, umfassend:
- mindestens einen Träger (6), der dazu bestimmt ist, eine Vielzahl von Behältern (7) aufzunehmen, die mit Verschlusselementen (8) versehen sind und Proben von Körperflüssigkeiten enthalten, die zu analysieren sind,
- ein Lademodul (14), das angeordnet ist, um den mindestens einen Träger (6) zwischen einer Ladeposition (P1) und einer ersten Zwischenposition (P2) gemäß einer ersten Bewegungsrichtung (D1) quer zu der Ebene des mindestens einen Trägers zu bewegen,
- ein Schüttelmodul (21), das angeordnet ist, um den mindestens einen Träger (6) zwischen der ersten Zwischenposition (P2) und einer zweiten Zwischenposition (P3) zu bewegen und um den mindestens einen Träger (6) zu schütteln, wobei das Schüttelmodul so angeordnet ist, dass sich der mindestens eine Träger im Wesentlichen gemäß einer gleichen Ausrichtung in der ersten und zweiten Zwischenposition erstreckt, wobei das Schüttelmodul (21) umfasst:
- Führungsmittel, die angeordnet sind, um den mindestens einen Träger (6) zwischen der ersten und zweiten Zwischenposition gemäß einer Führungsrichtung (D2) verschiebend zu führen,
- Verschiebungsantriebsmittel, die angeordnet sind, um den mindestens einen Träger (6) zwischen der ersten und zweiten Zwischenposition gemäß der Führungsrichtung verschiebend anzutreiben, und
- ein Entlademodul (37), das angeordnet ist, um den mindestens einen Träger (6) zwischen der zweiten Zwischenposition (P3) und einer Entladeposition (P4) gemäß einer zweiten Bewegungsrichtung (D3) quer zu der Ebene des mindestens einen Trägers zu bewegen, und
- ein Entnahmemodul (43), das angeordnet ist, um Proben einer Körperflüssigkeit in den Behältern (7) zu entnehmen, die in dem mindestens einem Träger (6) aufgenommen sind,
**dadurch gekennzeichnet, dass** das Schüttelmodul (21) des Weiteren Schwenkmittel umfasst, die angeordnet sind, um die Führungsmittel schwenkend um eine Schwenkachse (A) anzutreiben, und dadurch, dass die Analysevorrichtung des Weiteren umfasst:
∘ einen Laderotor (55), der zwischen dem Lade- und Entlademodul (14, 37) und mit einer im Wesentlichen vertikalen Drehachse angeordnet ist, und Drehantriebsmittel, die mit dem Laderotor (55) verbunden und angeordnet sind, um den Laderotor um seine Drehachse anzutreiben, wobei der Laderotor (55) eine Vielzahl von Aussparungen (56) umfasst, die geeignet sind, Behälter (57) aufzunehmen, die Proben einer Körperflüssigkeit, die zu analysieren sind, oder Reagenzprodukte enthalten, wobei das Entnahmemodul (43) angeordnet ist, um Proben oder Reagenzprodukte in den Behältern (57) zu entnehmen, die in dem Laderotor (55) aufgenommen sind,
und/oder
∘ ein Vorbereitungs- und Messmodul (59), umfassend:
- einen Vorbereitungsrotor (61) mit einer im Wesentlichen vertikalen Drehachse, wobei der Vorbereitungsrotor (61) eine Vielzahl von Vorbereitungswannen (62) umfasst, wobei das Entnahmemodul (43) angeordnet ist, um die Vorbereitungswannen (62) mit Proben einer Körperflüssigkeit oder mit Reagenzprodukten, die zuvor entnommen wurden, zu versorgen, und
- Drehantriebsmittel, die mit dem Vorbereitungsrotor (61) verbunden und angeordnet sind, um den Vorbereitungsrotor um seine Drehachse in Drehung zu versetzen.

2. Analysevorrichtung nach Anspruch 1, wobei das Lade- und Entlademodul (14, 37) angeordnet sind, um den mindestens einen Träger (6) bei seinen Bewegungen gemäß der ersten und zweiten Bewegungsrichtung im Wesentlichen vertikal zu halten.

3. Analysevorrichtung nach Anspruch 1 oder 2, wobei das Schüttelmodul (21) angeordnet ist, um den mindestens einen Träger (6) bei seinen Bewegungen zwischen der ersten und zweiten Zwischenposition im Wesentlichen vertikal zu halten.

4. Analysevorrichtung nach einem der Ansprüche 1 bis 3, wobei das Schüttelmodul (21) und das Lade- und Entlademodul (14, 37) einen Transportweg des Trägers definieren, der im Allgemeinen U-förmig ist.

5. Analysevorrichtung nach einem der Ansprüche 1 bis 4, wobei das Lade- und Entlademodul (14, 37) jeweils ein erstes und ein zweites Förderband (16, 39) umfassen.

6. Analysevorrichtung nach einem der Ansprüche 1 bis 5, wobei die Führungsmittel einen Trägerhalter (22) umfassen, der eine Aussparung (23) begrenzt, in der der mindestens eine Träger (6) gemäß der Führungsrichtung gleiten kann, wobei der Trägerhalter schwenkend um die Schwenkachse (A) montiert ist.

7. Analysevorrichtung nach Anspruch 6, wobei der Trägerhalter (22) mindestens eine erste Führungswand (24) umfasst, die angeordnet ist, um mit einer Seitenwand eines Trägers (6) beim Gleiten des Trägers in der Aussparung (23) des Trägerhalters zusammenzuwirken, und eine Rückhaltewand (25), die angeordnet ist, um mit Verschlusselementen (8) der Behälter (7), die in dem Träger (6) aufgenommen sind, zusammenzuwirken, sodass die Behälter (7) in dem Träger (6) beim Schwenken des Trägerhalters (22) zurückgehalten werden.

8. Analysevorrichtung nach einem der Ansprüche 1 bis 7, wobei sich jede Vorbereitungswanne (62) in einer Ebene im Wesentlichen senkrecht zu einem Durchmesser des Vorbereitungsrotors (61) erstreckt.

9. Analysevorrichtung nach einem der Ansprüche 1 bis 8, wobei mindestens eine Vorbereitungswanne (62) einen abgerundeten Boden aufweist, dessen Konkavität nach oben gewandt ist.

10. Analysevorrichtung nach einem der Ansprüche 1 bis 9, wobei die Drehantriebsmittel, die mit dem Vorbereitungsrotor (61) verbunden sind, angeordnet sind, um den Vorbereitungsrotor in einer ersten Richtung (S1) und in einer zweiten Richtung (S2), die der ersten Richtung entgegengesetzt ist, in Drehung zu versetzen.

## Claims

1. An analysis device (2) for in vitro diagnosis, comprising:
- at least one rack (6) intended to receive a plurality of containers (7) equipped with sealing elements (8) and containing samples of biological liquid to be analyzed,
- a loading module (14) arranged to move the at least one rack (6) between a loading position (P1) and a first intermediate position (P2) along a first movement direction (D1) transverse to the plane of the at least one rack,
- a shaking module (21) arranged to move the at least one rack (6) between the first intermediate position (P2) and a second intermediate position (P3) and to shake the at least one rack (6), the shaking module being arranged such that the at least one rack extends substantially along a same orientation in the first and second intermediate positions, the shaking module (21) including:
- guiding means arranged to guide in translation the at least one rack (6) between the first and second intermediate positions along a guiding direction (D2),
- translational driving means arranged to drive in translation the at least one rack (6) between the first and second intermediate positions along said guiding direction, and
- an unloading module (37) arranged to move the at least one rack (6) between the second intermediate position (P3) and an unloading position (P4) along a second movement direction (D3) transverse to the plane of the at least one rack, and
- a sampling module (43) arranged to take samples of biological liquid in the containers (7) received in the at least one rack (6),
**characterized in that** the shaking module (21) further including pivoting means arranged to pivotally drive the guiding means around a pivot axis (A), and **in that** the analysis device further comprising:
∘ a loading rotor (55) disposed between the loading and unloading modules (14, 37) and of a substantially vertical axis of rotation, and rotation driving means associated with the loading rotor (55) and arranged to drive in rotation the loading rotor around its axis of rotation, the loading rotor (55) comprising a plurality of housings (56) able to receive containers (57) containing samples of biological liquid to be analyzed or reagent products, the sampling module (43) being arranged to take samples or reagent products in the containers (57) received in the loading rotor (55),
and/or
∘ a preparation and measuring module including:
- a preparation rotor (61) of a substantially vertical axis of rotation, the preparation rotor (61) comprising a plurality of preparation cuvettes (62), the sampling module (43) being arranged to supply the preparation cuvettes (62) with samples of biological liquid or reagent products previously taken, and
- rotation driving means associated with the preparation rotor (61) and arranged to drive in rotation the preparation rotor around its axis of rotation.

2. The analysis device according to claim 1, wherein the loading and unloading modules (14, 37) are arranged to maintain the at least one rack (6) substantially vertical during its movements along the first and second movement directions.

3. The analysis device according to claim 1 or 2, wherein the shaking module (21) is arranged to maintain the at least one rack (6) substantially vertical during its movements between the first and second intermediate positions.

4. The analysis device according to any of claims 1 to 3, wherein the shaking module (21) and the loading and unloading modules (14, 37) define a generally U-shaped rack transport path.

5. The analysis device according to any of claims 1 to 4, wherein the loading and unloading modules (14, 37) include respectively a first and a second conveyors (16, 39).

6. The analysis device according to any of claims 1 to 5, wherein the guiding means include a rack support (22) delimiting a housing (23) wherein the at least one rack (6) is able to slide along the guiding direction, the rack support being pivotally mounted around the pivot axis (A).

7. The analysis device according to claim 6, wherein the rack support (22) includes at least a first guiding wall (24) arranged to cooperate with a lateral wall of a rack (6) during the sliding of said rack in the housing (23) of the rack support, and a retaining wall (25) arranged to cooperate with sealing elements (8) of containers (7) received in said rack (6) so as to retain the containers (7) in said rack (6) during the pivoting of the rack support (22).

8. The analysis device according to any of claims 1 to 7, wherein each preparation cuvette (62) extends in a plane substantially perpendicular to a diameter of the preparation rotor (61).

9. The analysis device according to any of claims 1 to 8, wherein at least one preparation cuvette (62) has a rounded bottom, the concavity of which is turned upwards.

10. The analysis device according to any of claims 1 to 9, wherein the rotation driving means associated with the preparation rotor (61) are arranged to drive in rotation the preparation rotor in a first direction (51) and in a second direction (S2) opposite to the first direction.
